# EUROPEAN PATENT APPLICATION

(11) **EP 3 900 947 A1**
(43) Date of publication of application: **27.10.2021**
(21) Application number: 19898678.8
(22) Date of filing: 17.12.2019
(51) Int. Cl.: B60B 21/00, B60C 19/00, B60L 5/00, B60M 7/00, B60C 9/22, B60L 53/00

(54) **TIRE, VEHICLE POWER SUPPLY DEVICE AND MOVING BODY**

(30) Priority: 17.12.2018 JP 2018235650; 17.12.2018 JP 2018235662; 17.12.2018 JP 2018235709
(71) Applicant: BRIDGESTONE CORPORATION, Chuo-ku Tokyo 104-8340 (JP)
(72) Inventor: WAKAO, Yasumichi, Tokyo 104-8340 (JP); NAKAMURA, Masaaki, Tokyo 104-8340 (JP); SHIZUKU, Takahisa, Tokyo 104-8340 (JP)
(74) Representative: Oxley, Robin John George
(86) International application number: PCT/JP2019/049380
(87) International publication number: WO 2020/129972

(57) **Abstract**

The carcass (40) of the pneumatic tire (10) includes a plurality of carcass cords (40 a) formed of conductors and arranged along the tire radial direction and the tire width direction, and a circumferential cord (71) formed of conductors and arranged along the tire circumferential direction. The circumferential cord (71) contacts the carcass cord (40 a).

## Description

### [Technical Field]

The present invention relates to a tire, a vehicle power feeding apparatus, and an automobile which can be suitably used for a contactless power feeding system.

### [Background Art]

A so-called electric field power feeding system is known as a system (contactless power feeding system) for supplying electric power to a vehicle such as an electric vehicle in a contactless (Wireless) manner (See Patent Literature 1.).

In the electric field power feeding system, a tire mounted on a rim wheel relays an electric field from a metal plate buried in a road into a vehicle. Thus, electric power can be supplied from the road to the vehicle, and the power feeding can be applied to the vehicle during traveling.

### [Citation List]

### [Patent Literature]

[PTL 1] Japanese Patent No. 5777139

### [Summary of Invention]

However, the conventional electric field power feeding system described above has the following problem. Specifically, in general, the conductivity of the tire itself is not necessarily high, which can be a factor of lowering the transmission efficiency of electric power.

Accordingly, an object of the present invention is to provide a tire, a vehicle power feeding apparatus, and an automobile that can improve the transmission efficiency of electric power supplied from the road side.

One aspect of the present invention is a tire (pneumatic tire 10) including a tread portion (tread portion 20) in contact with a road surface, and a carcass (Carcass 40) of a radial structure provided inside in the tire radial direction of the tread portion. The carcass includes carcass cords (carcass cord 40 a) formed of conductors and arranged along tire radial direction and tire width direction, and circumferential cords (circumferential cords 71, 72, 73) formed of a conductor and arranged along a tire circumferential direction. The circumferential cord is in contact with the carcass cords.

One aspect of the present invention is a tire (pneumatic tire 10) including a tread portion (tread portion 20) in contact with a road surface, a belt layer (belt layer 50) provided inside in the tire radial direction of the tread portion, and a carcass (carcass 40) provided inside in the tire radial direction of the belt layer. The carcass has carcass cords (carcass cord 40 a) formed of a conductor, and the belt layer has belt cords (belt cord 51 a, 52 a) arranged along a predetermined direction and formed of a conductor. The tire comprises a connection portion (connection portion 45) for connecting the carcass cords and the belt cords.

One aspect of the present invention is a tire (pneumatic tire 10) including a tread portion (tread portion 20) in contact with a road surface, a belt layer (belt layer 50) provided inside in the tire radial direction of the tread portion, and a carcass (carcass 40) provided inside in the tire radial direction of the belt layer. The belt layer includes a first crossing belt (crossing belt 51) , and a second crossing belt (crossing belt 52) provided inside in the tire radial direction of the first crossing belt. The carcass comprises carcass cords (carcass cord 40 a) formed of a conductor, and at least either the first crossing belt or the second crossing belt comprises belt cords (belt cord 51 a, 52 a) formed of a non-conductive member.

### [Brief Description of Drawings]

FIG. 1 is an overall schematic configuration of a vehicle power feeding system 1.
FIG. 2 is a cross-sectional view of a pneumatic tire 10 along the tire width direction and the tire radial direction.
FIG. 3 is a partially exploded perspective view of the pneumatic tire 10.
FIG. 4 is a top view (tread surface view) showing a portion of a carcass 40 and a belt layer 50 of the pneumatic tire 10.
FIG. 5 is a partially transmissive perspective view of a body portion 41 of the carcass 40.
FIG. 6 is a partially cross-sectional view of the body portion 41 of the carcass 40 and the belt layer 50.
FIG. 7 is a top view (tread surface view) showing a portion of the carcass 40 and the belt layer 50 of a pneumatic tire 10 A according to a modified example.

### [Description of Embodiments]

Embodiments will be described below with reference to the drawings. The same functions and configurations are denoted by the same or similar reference numerals, and description thereof will be omitted as appropriate.

### (1)Overall configuration of the vehicle power feeding system

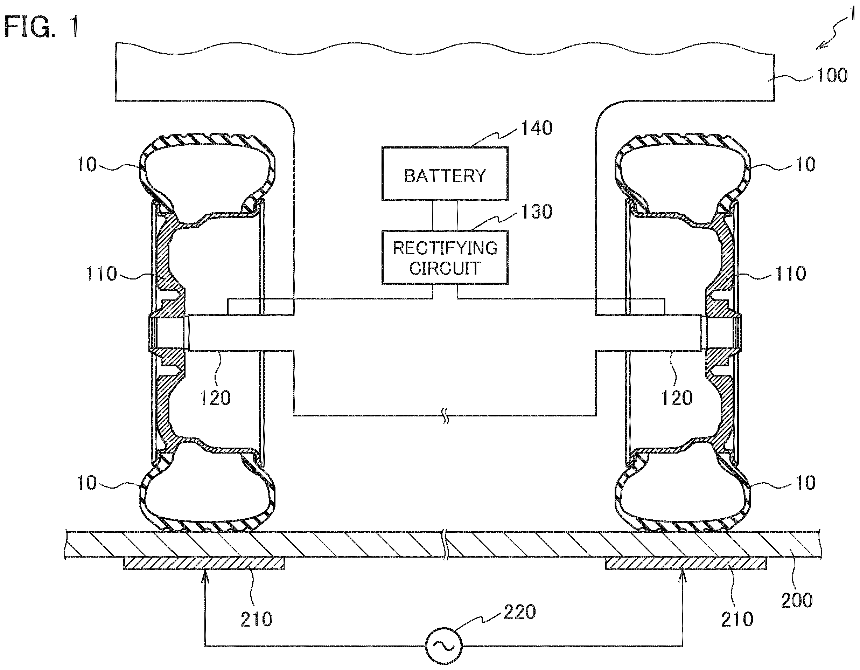

FIG. 1 is an overall schematic configuration diagram of a vehicle power feeding system 1 according to the present embodiment. As shown in FIG. 1, the vehicle power feeding system 1 includes a vehicle 100 and a road 200. The vehicle 100 is mounted with the pneumatic tire 10.

Specifically, FIG. 1 shows a schematic cross-sectional view of the vehicle 100 (including the pneumatic tire 10) along a vehicle width direction, and a schematic cross-sectional view of the road 200 along the vehicle width direction.

The vehicle 100 is a standard four-wheel passenger vehicle in this embodiment. The vehicle 100 may not necessarily be a four-wheel vehicle or a passenger vehicle. However, as shown in FIG. 1, in the vehicle 100, at least one axle includes a pair of left and right wheels (tire).

In the present embodiment, the vehicle 100 is an electric vehicle (EV) that travels only on the power of a battery 140. The vehicle 100 may be a plug-in hybrid vehicle (PHEV) capable of charging the battery 140 from the outside.

A pair of power transmission units 210 are buried in the road 200 on which the vehicle 100 travels. The pair of power transmission units 210 are buried at a predetermined distance in the width direction of the road 200 so as to correspond to the tread width of the vehicle 100.

A power supply 220 is connected to the pair of power transmission units 210. The power supply 220 supplies electric power to the vehicle 100 via the power transmission unit 210. Specifically, the power supply 220 realizes a system (contactless power feeding system) for supplying power via the power transmission unit 210 in a contactless (wireless) manner.

Such a contactless power feeding system is called an electric field power feeding system. In the electric field power feeding system, a series resonance circuit is configured on both a power transmission side (road 200 side) and a power reception side (vehicle 100 side), and power (AC power) is transmitted in a resonance state. In this embodiment, the resonance frequency is about 13 MHz.

A rim wheel 110 with an assembled pneumatic tire 10 is mounted on an axle 120 (hub) of the vehicle 100. The rim wheel 110 may be a steel wheel or an aluminum wheel.

The axle 120 is also made of metal. That is, the rim wheel 110 mounted on the axle 120 is electrically connected to the axle 120.

AC power is supplied from the power supply 220 to a rectifying circuit 130 provided in the vehicle 100 via the power transmission units 210, the road 200, the pneumatic tire 10, the rim wheel 110 and the axle 120. The rectifier circuit 130 supplies rectified DC power to the battery 140.

The battery 140 supplies electric power to a driving motor (unillustrated) of the vehicle 100. On the other hand, the battery 140 stores power supplied from the outside. The outside includes the power supply 220 on the road 200 side and a power supply (charging stand, etc.) connected to a charging socket (unillustrated). Since the power feeding from the power supply 220 to the battery 140 is contactless (wireless) as described above, charging is possible even when the vehicle 100 is traveling.

In this embodiment, the power transmission units 210 and the power supply 220 on the road 200 side constitute a vehicle power feeding apparatus for supplying power to an automobile including the vehicle 100. The vehicle 100 constitutes an automobile fed power from the vehicle feeding apparatus.

### (2)Configuration of tire

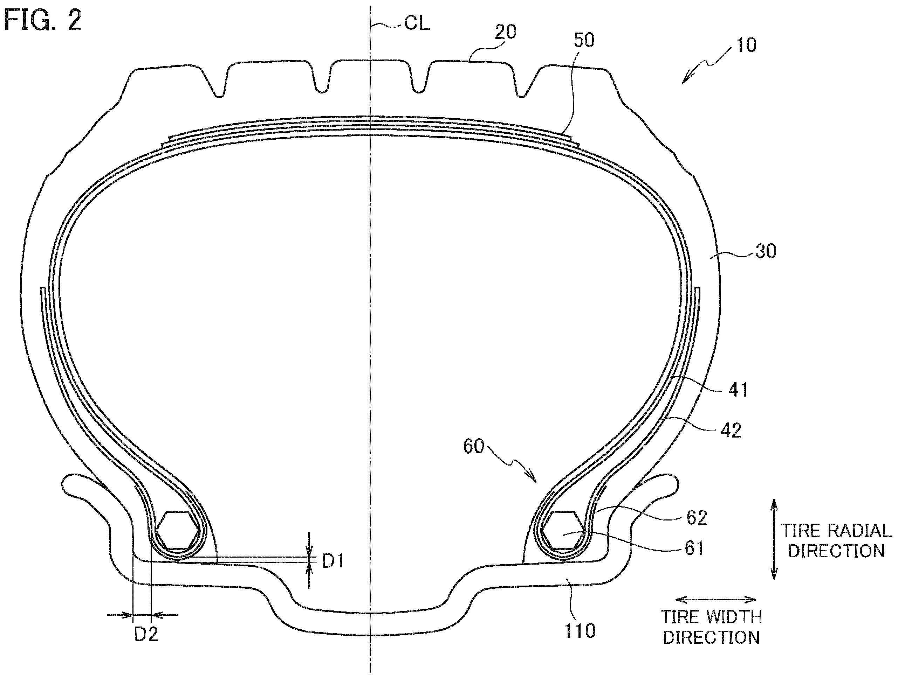

Next, a configuration of the pneumatic tire 10 mounted on the vehicle 100 will be described. FIG. 2 is a cross-sectional view of the pneumatic tire 10 along the tire width direction and the tire radial direction.

As shown in FIG. 2, the pneumatic tire 10 includes a tread portion 20, a tire side portion 30, a carcass 40, a belt layer 50, and a bead portion 60. The pneumatic tire 10 has a generally symmetrical shape with respect to the tire equatorial line CL of the tire. However, the pneumatic tire 10 may not necessarily have a completely symmetrical shape with respect to the tire equatorial line CL.

The tread portion 20 is a part in contact with a road surface. On the tread portion 20, a pattern (unillustrated) corresponding to the use environment of the pneumatic tire 10 and the kind of a vehicle to be mounted is formed

The tire side portion 30 continues to the tread portion 20 and is positioned inside in the tire radial direction of the tread portion 20. The tire side portion 30 is a region from the tire width direction outside end of the tread portion 20 to the upper end of the bead portion 60. The tire side portion 30 is sometimes referred to as a side wall or the like.

The carcass 40 forms the skeleton of the pneumatic tire 10. The carcass 40 is provided inside in the tire radial direction of the tread portion 20. Specifically, the carcass 40 is provided inside in the tire radial direction of the belt layer 50. The carcass 40 has the body portion 41 and a folded portion 42.

The body portion 41 is provided over the tread portion 20, the tire side portion 30 and the bead portion 60, and is a portion until it is folded in the bead portion 60.

The folded portion 42 is a part continued to the body portion 41 and folded back to the outside of the tire width direction via the bead portion 60.

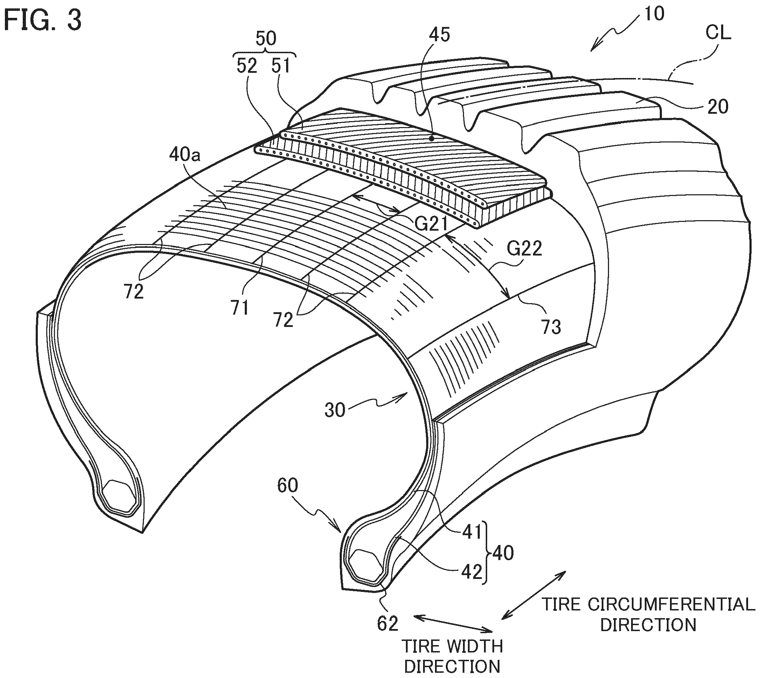

The carcass 40 has a radial structure in which a carcass cord 40 a (not shown in FIG. 2, see FIG. 3) arranged along the tire radial direction and the tire width direction is covered with a rubber material. However, the present invention is not limited to a radial structure, and may be a bias structure in which the carcass cords are arranged so as to cross each other in the tire radial direction.

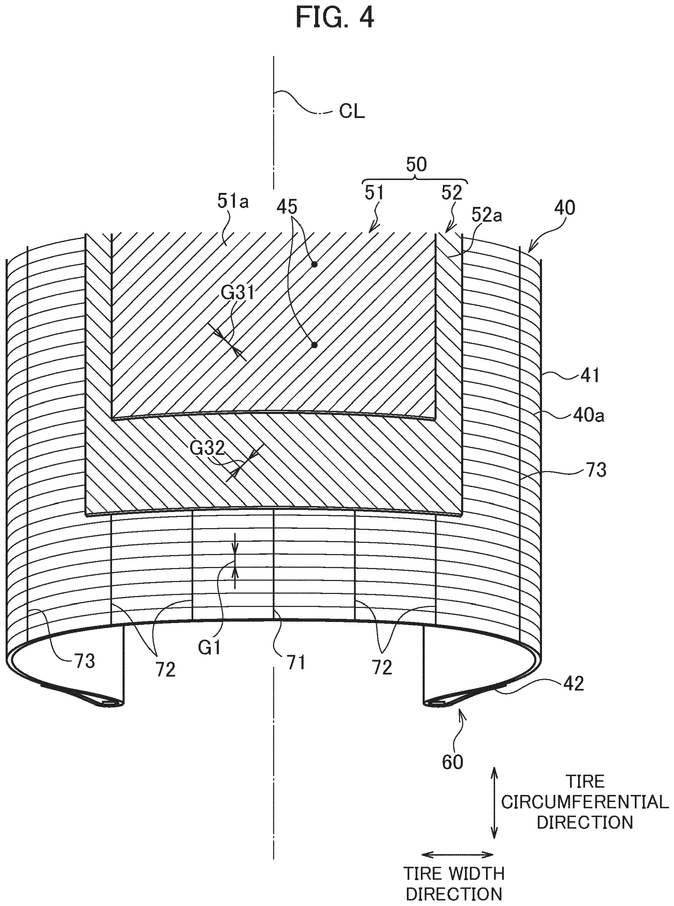

The belt layer 50 is provided inside the tire radial direction of the tread portion 20 rather than inside. The belt layer 50 includes a pair of crossing belts 51, 52 (not shown in FIG. 2, see FIGS. 3 and 4). The belt layer 50 may include a reinforcing belt provided outside the tire radial direction of the crossing belts 51 and 52.

The bead portion 60 continues to the tire side portion 30 and is positioned inside in the tire radial direction of the tire side portion 30. The bead portion 60 is an annular shape extending to the tire circumferential direction and locked to the rim wheel 110. The bead portion 60 includes a bead core 61 and a chafer 62.

The bead core 61 is annular along the tire circumferential direction. In this embodiment, the cross-sectional shape of the bead core 61 is hexagonal. However, the cross-sectional shape of the bead core 61 is not limited to a hexagonal shape, but may be a circular shape or a square shape. The bead core 61 is often formed of a metal such as steel, but may be formed of an organic fiber or a resin may be partially used.

The chafer 62 is provided inside the tire radial direction of the bead core 61. The chafer 62 protects the carcass 40 and prevents damage of the carcass 40 due to friction with the rim wheel 110. The chafer 62 is a composite body in which fibers are covered with a rubber member.

In this embodiment, the chafer 62 has a portion formed by a conductor. Specifically, the fibers constituting the chafer 62 are formed of a metal such as steel.

Preferably, at least one of the distance D1 between the tire radial direction inner end of the carcass 40 in the bead portion 60 and the tire radial direction inner end of the bead portion 60, and the distance D2 between the tire width direction outer end of the carcass 40 in the bead portion 60 and the tire width direction outer end of the bead portion 60 is 2 mm or less.

Note that the distance D1 may be the shortest or the distance D2 may be the shortest depending on the size or type of the pneumatic tire 10.

### (3)Internal structure of tire

Next, the internal structure of the pneumatic tire 10 will be described in more detail. FIG. 3 is a partially exploded perspective view of the pneumatic tire 10. FIG. 4 is a top view (tread surface view) showing a portion of the carcass 40 of the pneumatic tire 10 and the belt layer 50.

As shown in FIGS. 3 and 4, the carcass 40 (body portion 41 and the folded portion 42) has a plurality of carcass cords 40 a arranged along the tire radial direction and the tire width direction. The carcass 40 is formed of a sheet-like member in which the carcass cord 40 a is coated with rubber.

The carcass 40 has a circumferential cord 71, a circumferential cord 72 and a circumferential cord 73 arranged along the tire circumferential direction.

The carcass cord 40 a is formed of a conductor. Specifically, the carcass cord 40 a is formed of a metal such as steel. The circumferential cord 71, the circumferential cord 72, and the circumferential cord 73 are also formed of conductors. Specifically, the circumferential cord 71, the circumferential cord 72, and the circumferential cord 73 are also formed of a metal such as steel.

The fibers constituting the chafer 62 may be formed of the same material as the carcass cord 40 a or the circumferential cords (metals).

The interval G1 (see Fig. 4) between adjacent carcass cords 40 a in the tire circumferential direction is preferably 3 mm or less at a position corresponding to the tread portion 20. The interval G1 is preferably 2 mm or less at a position corresponding to the bead portion 60.

In this embodiment, a plurality of circumferential cords are arranged at predetermined distances. Specifically, the circumferential cord 71 and the circumferential cord 72 are arranged in the tread portion 20. The circumferential cord 73 is arranged on the tire side portion 30.

An arrangement interval G 21 of the circumferential cords inside the tire radial direction of the tread portion 20 is narrower than an arrangement interval G 22 of the circumferential cords in the tire side portion 30. Specifically, the arrangement interval G 21 between the circumferential cord 71 and the circumferential cord 72 is narrower than the arrangement interval G 22 between the circumferential cord 72 arranged outside the tire width direction and the circumferential cord 73 . The arrangement interval G 21 depends on the tire size, but is preferably about 3 cm.

The belt layer 50 includes the crossing belt 51 and the crossing belt 52. The crossing belt 51 is provided inside the tire radial direction of the tread portion 20. In this embodiment, the crossing belt 51 constitutes the first crossing belt.

The crossing belt 51 has belt cords 51 a inclined with respect to the tire width direction (tire circumferential direction).

The crossing belt 52 is provided inside the tire radial direction of the crossing belt 51. In this embodiment, the crossing belt 52 constitutes the second crossing belt.

The crossing belt 52 has belt cords 52 a inclined with respect to the tire width direction (tire circumferential direction).

The belt cord 51 a and the belt cord 52 a are inclined in opposite directions. As a result, the belt cord 51 a and the belt cord 52 a intersect each other to form a pair of crossing belts.

In this embodiment, the belt cord 51 a and the belt cord 52 a are arranged along the predetermined direction. The belt cord 51 a and the belt cord 52 a are formed of a conductor. Specifically, the belt cord 51 a and the belt cord 52 a are formed of a metal such as steel in the same manner as the carcass cord 40 a.

The interval G 31 between adjacent belt cords 51 a and the interval G 32 between adjacent belt cords 52 a are preferably 2 mm or less.

Further, in the present embodiment, there is provided a connection portion 45 for connecting the carcass cord 40 a and the belt cords 51 a, 52 a.

The connection 45 is formed of a conductor and is provided at least at the central part of the tread portion 20 in the tire width direction. The "central part" is approximately 30% (based on tire equatorial line CL) of a ground contact width of the tread portion 20 with its normal internal pressure and the normal load applied to the pneumatic tire 10.

In this embodiment, a plurality of the connection portions 45 are provided in the tire circumferential direction.

### (4)Detailed configuration of carcass and belt layer

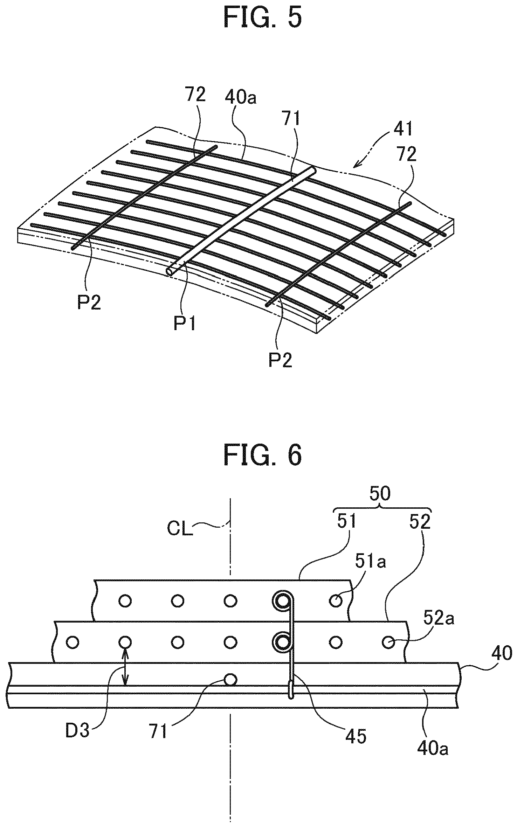

Next, the detailed configurations of the carcass 40 and the belt layer 50 will be described. FIG. 5 is a partially transmissive perspective view of the body portion 41 of the carcass 40. FIG. 6 is a partially cross-sectional view of the body portion 41 of the carcass 40 and the belt layer 50. In FIG. 5, the body portion 41 is shown by an imaginary line.

As shown in FIGS. 5 and 6, the circumferential cord contacts the carcass cord 40 a. Specifically, the circumferential cord 71 contacts a plurality of carcass cords 40 a extending along the tire width direction (portion P1 in the figure). Similarly, the circumferential cord 72 contacts a plurality of carcass cords 40 a extending along the tire width direction (portion P2 in the figure). In this embodiment, the width of the circumferential cord 71 is wider than the thickness of the circumferential cord 72.

Although not shown in FIGS. 5 and 6, the circumferential cord 73 arranged in the tire side portion 30 also contacts a plurality of carcass cords 40 a extending along the tire width direction. In this way, when the circumferential cords contact the carcass cord 40 a, the circumferential cords and the carcass cords 40 a become conductive.

The carcass 40 (body portion 41 and the folded portion 42) is formed by rubber-coating a carcass cord 40 a and circumferential cords 71, 72, 73 in contact with the carcass cord 40 a.

The connection portion 45 is formed of a conductor as described above. Specifically, the connection portion 45 is formed of a metal such as steel in the same manner as the carcass cord 40 a.

The connecting part 45 connects the carcass cord 40 a and the belt cords 51 a, 52 a. That is, the connection portion 45 connects the belt cord 51 a constituting the crossing belt 51 and the belt cord 52 a constituting the crossing belt 52, and also connects the carcass cord 40 a.

The connection 45 is formed by a linear member extending to the tire radial direction. In this embodiment, one end of the connection portion 45 is wound around the belt cord 51 a and the belt cord 52 a. The other end of the connection portion 45 is wound around the carcass cord 40 a.

The distance D3 of the shortest portion between the carcass cord 40 a and the belt cord 52 a is preferably 4 mm or less. The distance of the shortest portion between the belt cord 51 a and the belt cord 52 a is also preferably 4 mm or less.

### (5)Function and effects

According to the embodiment described above, the following effects can be obtained. Specifically, in the pneumatic tire 10, the carcass cord 40 a is formed of a conductor such as steel, and the circumferential cords 71, 72 and 73 also formed of a conductor are in contact with the carcass cord 40 a.

Therefore, the circumferential cords 71, 72, 73 and the carcass cord 40 a conduct, and the conductivity of the whole carcass 40 increases. In particular, in the present embodiment, since the carcass 40 has a radial structure, it is effective to make the plurality of carcass cords 40 a conductive by the circumferential cords 71, 72, 73. Thus, the transmission efficiency of the electric power fed from the road 200 side can be improved.

In this embodiment, a plurality of circumferential cords are arranged at predetermined distances. Specifically, the circumferential cords 71 and 72 are arranged on the tread portion 20, and the circumferential cord 73 is arranged on the tire side portion 30. Therefore, the conductivity can be increased in any region of the carcass 40. Thus, the transmission efficiency of the electric power fed from the road 200 side can be further improved.

In this embodiment, the arrangement interval G 21 between the circumferential cords 71 and 72 is narrower than the arrangement interval G 22 between the circumferential cords 72 and 73 arranged outside the tire width direction. Therefore, the conductivity of the carcass 40 on the tread portion 20 side close to the power transmission units 210 can be efficiently increased. Thus, the transmission efficiency of the electric power fed from the road 200 side can be further improved.

In this embodiment, the carcass 40 (body portion 41 and folded portion 42) is formed by rubber-coating the carcass cord 40 a and the circumferential cords 71, 72, 73 contacting with the carcass cord 40 a. Therefore, it is possible to reliably maintain a state in which the circumferential cords 71, 72, 73 and the carcass cord 40 a are in contact with each other. Thus, the transmission efficiency of the electric power fed from the road 200 side can be further improved.

In this embodiment, the chafer 62 has a portion formed by a conductor. Therefore, the conductivity of the bead portion 60 can also be increased. Thus, the transmission efficiency of the electric power fed from the road 200 side can be further improved.

In this embodiment, the belt cord 51 a and the belt cord 52 a are formed of a conductor such as steel, and the connection portion 45 formed of the conductor connects the carcass cord 40 a and the belt cords 51 a, 52 a.

Therefore, the carcass cord 40 a and the belt cords 51 a, 52 a are conduct, and the conductivity between the carcass 40 and the belt layer 50 is increased. Thus, the transmission efficiency of the electric power fed from the road 200 side can be improved.

In this embodiment, as described above, the connection portion 45 is connected not only to the belt cord of one crossing belt but also to the belt cords of both crossing belts, specifically, to the belt cords 51 a and the belt cords 52 a. Therefore, the conductivity between the crossing belt 51 and the crossing belt 52 is also increased. Thus, the transmission efficiency of the electric power fed from the road 200 side can be improved.

In this embodiment, the connection portion 45 is at least provided in the center part in the tire width direction of the tread portion 20 . Therefore, the conductivity of the carcass 40 and the belt layer 50 on the tread portion 20 side which is near the power transmission units 210 can be efficiently increased. Thus, the transmission efficiency of the electric power fed from the road 200 side can be further improved.

In this embodiment, a plurality of the connection portions 45 are provided in the tire circumferential direction. Thus, the conductivity of the carcass 40 and the belt layer 50 can be efficiently increased regardless of the area where the pneumatic tire 10 is grounded on the road 200 in the tire circumferential direction. In particular, the conductivity of the carcass 40 and the belt layer 50 can be increased while the vehicle 100 is traveling. Thus, the transmission efficiency of the electric power fed from the road 200 side can be further improved.

In this embodiment, the connection portion 45 is formed by a linear member extending to the tire radial direction. Therefore, the carcass cord 40 a, which is also a linear member, can be securely connected to the belt cords 51 a, 52 a. Thus, the transmission efficiency of the electric power feed from the road 200 side can be stably improved over a long period of time.

In the present embodiment, the carcass cord 40 a is formed of a conductor such as steel, and the circumferential cords 71, 72, 73 also formed of a conductor are in contact with the carcass cord 40 a.

Therefore, the circumferential cords 71, 72, and 73 and the carcass cord 40 a are conduct, and the conductivity of the whole carcass 40 increases. In particular, in the present embodiment, since the carcass 40 has a radial structure, it is effective to make the plurality of carcass cords 40 a conductive by the circumferential cords 71, 72, 73. Thus, the transmission efficiency of the electric power fed from the road 200 side can be improved.

In this embodiment, a plurality of circumferential cords are arranged at predetermined distances. Specifically, the circumferential cords 71 and 72 are arranged on the tread portion 20, and the circumferential cord 73 is arranged on the tire side portion 30. Therefore, the conductivity can be increased in any region of the carcass 40. Thus, the transmission efficiency of the electric power fed from the road 200 side can be further improved.

In this embodiment, the arrangement interval G 21 between the circumferential cords 71 and 72 is narrower than the arrangement interval G 22 between the circumferential cords 72 and 73 arranged outside the tire width direction. Therefore, the conductivity of the carcass 40 on the tread portion 20 side close to the power transmission units 210 can be efficiently increased. Thus, the transmission efficiency of the electric power fed from the road 200 side can be further improved.

In this embodiment, the carcass 40 (body portion 41 and folded portion 42) is formed by rubber-coating the carcass cord 40 a and the circumferential cords 71, 72, 73 contacting with the carcass cord 40 a. Therefore, it is possible to reliably maintain a state in which the circumferential cords 71, 72, 73 and the carcass cord 40 a are in contact with each other. Thus, the transmission efficiency of the electric power fed from the road 200 side can be further improved.

In this embodiment, the chafer 62 has a portion formed by a conductor. Therefore, the conductivity of the bead portion 60 can also be increased. Thus, the transmission efficiency of the electric power fed from the road 200 side can be further improved.

### (6)Modified examples

Next, a modified example in the configuration of the pneumatic tire 10 will be described. Specifically, the belt cord 51 a and the belt cord 52 a may be formed of a non-conductive member.

Specifically, the belt cord 51 a and the belt cord 52 a are formed of organic fibers (e.g., aramid or Kevlar). Either the belt cord 51 a or the belt cord 52 a may be formed of an organic fiber. That is, either one of the belt cord 51 a and the belt cord 52 a may be formed of a metal such as steel.

The distance G 31 between adjacent belt cords 51 a and the distance G 32 between adjacent belt cords 52 a are not particularly limited.

According to such a modification, the following effects can be obtained. Specifically, in the pneumatic tire 10, the carcass cord 40 a is formed of a conductor such as steel. Therefore, the overall conductivity of the carcass 40 is increased. On the other hand, the belt cord 51 a of the crossing belt 51 and the belt cord 52 a of the crossing belt 52 are formed of non-conductive members.

Therefore, the belt cord 51 a and the belt cord 52 a do not adversely affect an electric field (electric field) formed between the power transmission units 210 and the carcass 40. Specifically, transmission loss due to current flowing through the crossing belt 51 and the crossing belt 52 can occur. In this embodiment, the belt cord 51 a and the belt cord 52 a are formed of a non-conductive member, so that such adverse effect on the electric field can be eliminated. Thus, the transmission efficiency of the electric power fed from the road 200 side can be improved.

In particular, in this embodiment, the belt cord 51 a and the belt cord 52 a are formed of an organic fiber such as aramid or Kevlar, so that adverse effects on the electric field can be more reliably eliminated. Thus, the transmission efficiency of the electric power fed from the road 200 side can be further improved.

### (7)Other embodiments

Although the contents of the present invention have been described above with reference to the examples, it will be obvious to those skilled in the art that the present invention is not limited to these descriptions and that various modifications and improvements are possible.

For example, although the circumferential cords 71, 72 and 73 are arranged in the above-described embodiment, only one circumferential cord may be arranged instead of a plurality of circumferential cords. In this case, although it is preferable to provide the circumferential cord 71 arranged near the tire equatorial line CL, the present invention is not limited to the circumferential cord 71, and a circumferential cord 72 or a circumferential cord 73 may be provided.

In the embodiment described above, the chafer 62 having a portion formed by a conductor is provided, but the chafer 62 may not necessarily have a portion formed by a conductor. Further, the chafer 62 itself may not be provided.

In the above-described embodiment, the connection portion 45 is connected to the belt cord of the crossing belt, but when the pneumatic tire 10 is provided with a reinforcing belt other than the crossing belt, it may be connected to the belt cord of the reinforcing belt.

In the above-described embodiment, the connection portion 45 is provided in the central part of the tire width direction of the tread portion and a plurality of the connection portions are provided in the tire circumferential direction, but the connection portion 45 may be provided in a portion other than the central part or only one of the connection portions.

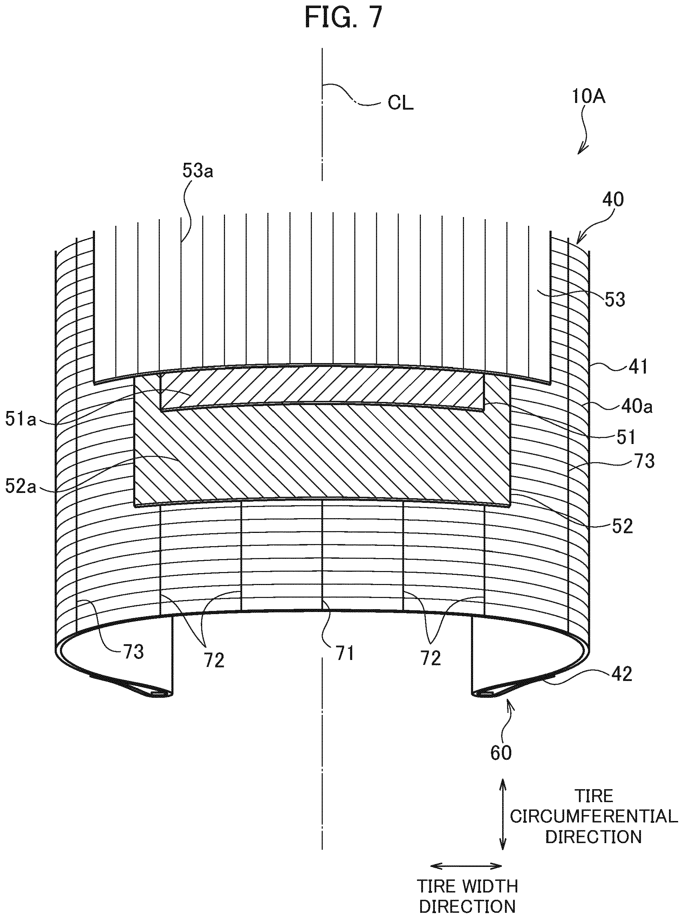

The configuration of the belt layer 50 may be changed as follows. FIG. 7 is a top view (tread surface view) showing a part of the carcass 40 and the belt layer 50 of a pneumatic tire 10 A according to a modified example.

As shown in FIG. 7, the belt layer 50 of the pneumatic tire 10 A includes a reinforcing belt 53 in addition to the crossing belt 51 and crossing belt 52. The reinforcing belt 53 is provided outside the tire radial direction of the crossing belt 51.

The reinforcing belt 53 has a belt cord 53 a. The belt cord 53 a is formed of a non-conductive member. Specifically, the belt cord 53 a is formed of an organic fiber (e.g., aramid or Kevlar).

The belt cord 51 a and the belt cord 52 a are preferably formed of non-conductive members in the same manner as the pneumatic tire 10.

According to pneumatic tire 10 A, since the belt cord 53 a is formed of a non-conductive member, adverse effects on an electric field formed between the power transmission units 210 and the carcass 40 can be eliminated. Thus, the transmission efficiency of the electric power fed from the road 200 side can be improved.

While embodiments of the invention have been described as above, it should not be understood that the statements and drawings which form part of this disclosure are intended to limit the invention. Various alternative embodiments, examples and operating techniques will become apparent to those skilled in the art from this disclosure.

### [Reference Signs List]

- 1: Vehicle power feeding system
- 10 , 10: A Pneumatic tire
- 20: Tread portion
- 30: Tire side portion
- 40: Carcass
- 40: a Carcass cord
- 41: Body portion
- 42: folded portion
- 45: Connection portion
- 50: Belt layer
- 51, 52: Crossing belt
- 53: Reinforcement belt
- 51 a, 52 a, 53 a: Belt cord
- 60: Bead portion
- 61: Bead Core
- 62: Chaffer
- 71, 72, 73: Circumferential cords
- 100: Vehicle
- 110: Rim wheel
- 120: Axle
- 130: Rectifying circuit
- 140: Battery
- 200: Roads
- 210: Power transmission unit
- 220: Power supply

## Claims

1. A tire comprising:
a tread portion in contact with a road surface; and
a carcass of a radial structure provided inside in the tire radial direction of the tread portion,
wherein the carcass comprises:
carcass cords formed of conductors and arranged along tire radial direction and tire width direction; and
circumferential cords formed of a conductor and arranged along a tire circumferential direction;
wherein the circumferential cord is in contact with the carcass cords.

2. The tire according to claim 1, wherein the circumferential cords are arranged at predetermined distances from each other.

3. The tire according to claim 1, wherein the circumferential cords are arranged in the tread portion.

4. The tire according to claim 1, wherein the circumferential cords are arranged in the tread portion and a tire side portion that is continuous with the tread portion and is located inside in the tire radial direction of the tread portion.

5. The tire according to claim 4, wherein an interval of the circumferential cords inside in the tire radial direction of the tread portion is narrower than an interval of the circumferential cords in the tire side portion.

6. A vehicle power feeding apparatus for feeding power to a automobile including a vehicle, wherein:
a tire mounted to the automobile comprises:
a tread portion in contact with a road surface; and
a carcass of a radial structure provided inside in the tire radial direction of the tread portion,
wherein the carcass comprises:
carcass cords formed of conductors and arranged along tire radial direction and tire width direction; and
circumferential cords formed of a conductor and arranged along a tire circumferential direction;
wherein the circumferential cord is in contact with the carcass cords.

7. A automobile that is fed with power from a vehicle power feeding apparatus, wherein:
a tire mounted to the automobile comprises:
a tread portion in contact with a road surface; and
a carcass of a radial structure provided inside in the tire radial direction of the tread portion,
wherein the carcass comprises:
carcass cords formed of conductors and arranged along tire radial direction and tire width direction; and
circumferential cords formed of a conductor and arranged along a tire circumferential direction;
wherein the circumferential cord is in contact with the carcass cords.

8. A tire comprising:
a tread portion in contact with a road surface;
a belt layer provided inside in the tire radial direction of the tread portion; and
a carcass provided inside in the tire radial direction of the belt layer,
wherein the carcass comprises carcass cords formed of a conductor, and
the belt layer comprises belt cords arranged along a predetermined direction and formed of a conductor,
wherein the tire comprises a connection portion for connecting the carcass cords and the belt cords.

9. The tire according to claim 8, wherein the belt layer includes:
a first crossing belt; and
a second crossing belt provided inside in the tire radial direction of the first crossing belt,
wherein the connection portion connects the belt cords constituting the first crossing belt and the belt cords constituting the second crossing belt.

10. The tire according to claim 8 or 9, wherein the connection portion is at least provided in a central part of the of the tread portion.

11. The tire according to any one of claims 8 to 10, wherein a plurality of the connection portions is provided in the tire circumferential direction.

12. The tire according to any one of claims 8 to 11, wherein the connection portion is formed by a linear member extending to the tire radial direction.

13. A tire comprising:
a tread portion in contact with a road surface;
a belt layer provided inside in the tire radial direction of the tread portion; and
a carcass provided inside in the tire radial direction of the belt layer,
wherein the belt layer includes:
a first crossing belt; and
a second crossing belt provided inside in the tire radial direction of the first crossing belt;
wherein the carcass comprises carcass cords formed of a conductor, and
at least either the first crossing belt or the second crossing belt comprises belt cords formed of a non-conductive member.

14. The tire according to claim 13, wherein the belt layer includes a reinforcing belt provided outside in the tire radial direction of the first crossing belt,
wherein the reinforcing belt comprises the belt cords.

15. The tire according to claim 13 or 14, wherein the belt cords are made of an organic fiber.
